# EUROPEAN PATENT SPECIFICATION

(11) **EP 0 555 172 B1**
(45) Date of publication and mention of the grant of the patent: **18.09.1996**
(21) Application number: 93610006.4
(22) Date of filing: 25.01.1993
(51) Int. Cl.: B01D 53/34

(54) **Process of treating flue gas**
Verfahren zur Behandlung von Abgasen
Procédé pour le traitement de gaz de fumée

(30) Priority: 05.02.1992 JP 20002/92
(43) Date of publication of application: 11.08.1993
(73) Proprietor: MITSUBISHI JUKOGYO KABUSHIKI KAISHA, Tokyo (JP)
(72) Inventor: Tatani, Atsushi, c/o Hiroshima R & D Center, Nishi-ku, Hiroshima-shi, Hiroshima-ken (JP); Fujita, Hiroshi, c/o Hiroshima R & D Center, Nishi-ku, Hiroshima-shi, Hiroshima-ken (JP); Minemoto, Masaki, c/o Takasago R & D Center, Arai-cho, Takasago-shi, Hyogo-ken (JP); Kotake, Shinichiro, c/o Mitsubishi Jukogyo K.K., Chiyoda-ku, Tokyo (JP)
(74) Representative: Hegner, Mogens

(56) References cited:
- EP-A- 0 048 449
- EP-A- 0 409 761
- DE-A- 3 916 705
- FR-A- 2 418 018

## Description

### BACKGROUND OF THE INVENTION

### 1. Field of the Invention

This invention relates to a process for removing sulfur oxides from flue gas by a semi-dry method using a slurry of an alkaline agent.

### 2. Description of the Related Art

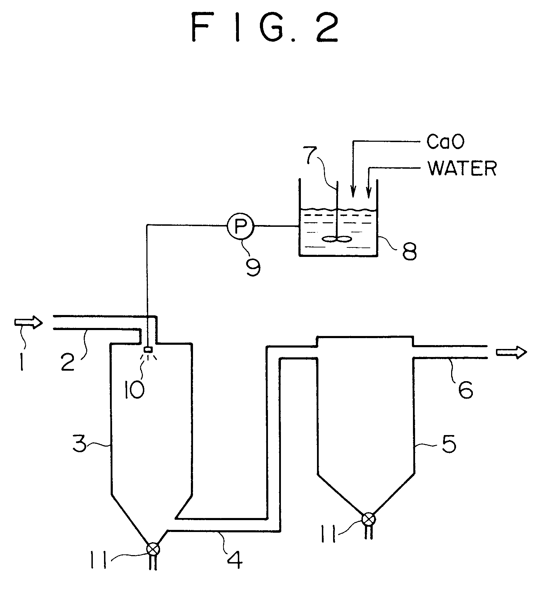

A conventional technique of removing sulfur oxides (hereinafter simply called "SO₂" for short) from flue gas by a semi-dry method is illustrated in Fig. 2. As shown, SO₂-containing combustion exhaust gas 1 is introduced via a flue gas inlet line 2 into a reaction column 3, and the reaction products from the column 3 are conducted through a discharge line 4 into a reaction product collector (bag filter or electric dust collector) 5, and then cleaned gas is released into the atmosphere through a gas discharge line 6.

Meanwhile, quicklime (CaO) powder to be used as an SO₂ absorbent is supplied together with water to an alkali tank 8 equipped with an agitator 7. In the tank the mixture is made into a slurry, and the resulting slurry is conducted to the reaction column 3 by a slurry pump 9 and sprayed from an atomizer 10 inside the column to bring it into contact with the flue gas. The SO₂ gas in the incoming flue gas chemically reacts with Ca(OH)₂ to form CaSO₄. The flue gas at a high temperature of about 170 to 180°C is cooled by water spray to about 50 to 60°C before it is discharged. SO₂ dissolves into water to form SO₃ ions, which in turn react with water-dissolved Ca ions to form CaSO₃. The product is then oxidized to become more stable CaSO₄, which affords a powdery reaction product upon evaporation of water. The system completes with a product discharge outlet 11 through which the final product is taken out.

Conventional systems such as this remove about 70 to 80% at most of SO₂ from flue gases and are not capable of achieving higher efficiencies than that.

The mechanism responsible for the removal of SO₂ gas from flue gas will now be described. When SO₂, an acidic gas, is brought into contact with an alkaline agent [Ca(OH)₂], a neutralization reaction occurs. Mixing CaO with water produces Ca(OH)₂, which partly dissolves to form Ca⁺⁺ and OH⁻ ions, but mostly remains solid because Ca(OH)₂ is only slightly soluble in water. On the other hand, SO₂ dissolves in water to form SO₄²⁻ and H⁺, and once in water Ca⁺⁺ and SO₄²⁻ react to form a neutral salt CaSO₄. Thus, spraying with an aqueous slurry of Ca(OH)₂ induces the above reaction, and in the early stage (in 2 to 3 s) about 60% of SO₂ is removed. The mechanism at the next stage is such that evaporation of water leaves unreacted Ca(OH)₂ powder behind, and this powder undergoes a solid-gas reaction with SO₂ gas to form CaSO₄. This reaction, however, proceeds very slowly and ordinary reaction columns are designed to allow 7 to 8 seconds for the reaction. Thus, in the conventional system the solid-gas reaction rate is only about 20 to 30% and the total SO₂ removal rate is no more than 70 to 80%. Since the reaction in water at the early stage is dictated by the velocity at which SO₂ gas diffuses and dissolves in water (droplets), an increase in the supply of Ca(OH)₂ would not improve the reaction rate.

### DESCRIPTION OF THE PROCESS OF EP-A-0 409 761

EP-A-0 409 761 discloses a process of treating flue gas utilizing a "semi-dry method" in which sulphur oxides in the flue gas are brought into contact with an alcaline compound - containing an absorbant slurry inside a reaction column to remove the sulphur oxides from the flue gas. The amount of moisture absorbing substance added to the absorbant slurry supplied to the reaction column is adjusted in dependence on the chloride content of the absorbent slurry supplied to the reaction column. Alternatively or simultaneously, the amount of flow of the absorbant slurry supplied to the reaction column is adjusted in dependence on said chloride content of the absorbent slurry.

By this above-mentioned process, which relies on measuring and adjustment of the chloride content of the suspension in a tank, delays in the control are unavoidable. When fluctuations exist in load conditions, it will become very difficult to control the system, so as to avoid the deposition of wet scale.

### SUMMARY OF THE INVENTION

In view of the state of the art described above, an object of the present invention is to provide a process for removing sulfur oxides from flue gas whereby the efficiency of the solid-gas reaction at the latter stage of sulfur oxides removal process can be enhanced.

The present invention provides a process of treating flue gas utilizing a semi-dry method as stated in claim 1.

The process of the invention in its preferred embodiment uses sea water as the aqueous solution of a moisture-absorbing substance.

The invention will be described in detail below.

The solid-gas reaction between Ca(OH)₂ (solid powder) and SO₂ gas depends substantially upon the water content in Ca(OH)₂. When Ca(OH)₂ contains much water, the reaction proceeds until it is all converted into CaSO₄, but when the water content is small the reaction yield is low. If the water content is little no reaction will occur. According to the invention, therefore, Ca(OH)₂ is mixed with a moisture-absorbing substance, such as CaCl₂, MgCl₂, LiCl, LiBr, LiI, CaI₂, CaBr₂, NaCl, Na₂CO₃, Mg(NO₃)₂, Ca(NO₃)₂, and K₂CO₃, so that the Ca(OH)₂ powder will contain some water. The moisture-absorbing substance takes up water from the flue gas being treated and increases the water content of solid Ca(OH)₂, so that the latter has a high enough water content for the solid-gas reaction to proceed.

To be more concrete, a mixture of an aqueous slurry of Ca(OH)₂ and an aqueous solution of a moisture-absorbing substance is sprayed from an atomizer located at the top of the reaction column. This produces a mixture of unreacted Ca(OH)₂ powder that has been left after the water evaporation and powder of the moisture-absorbing substance. In this manner the Ca(OH)₂ is allowed to contain sufficient water to perform the solid-gas reaction rapidly.

The term "semi-dry method" as used herein means a method of operation in which water is sprayed but it is completely evaporated inside the reaction column.

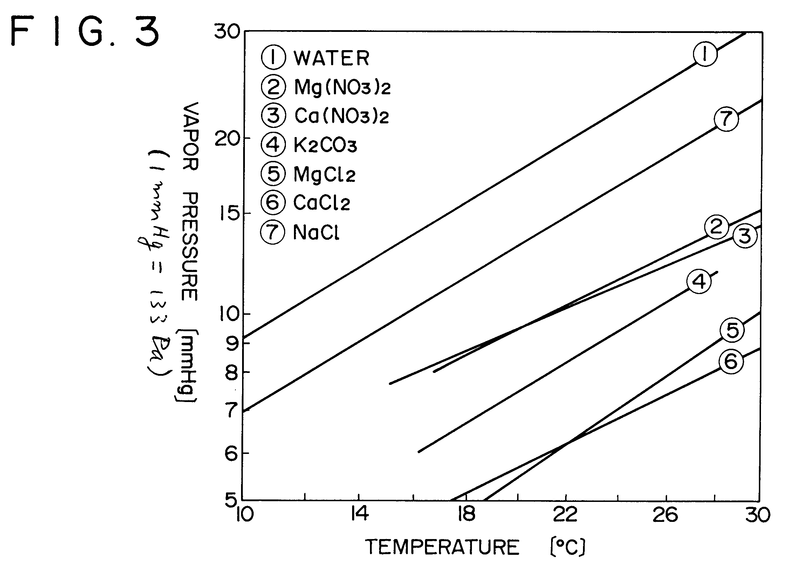

A moisture-absorbing substance adsorbs water vapor from a gas and forms a solution of itself. When the water vapor pressure of an aqueous solution saturated with a solid matter is lower than the water vapor partial pressure of the gas that comes in contact with the solution, it takes up water from the gas. Fig. 3 [taken from KAGAKU KOGAKU BINRAN (Chemical Engineering Handbook), publisher: Maruzen, 1968, p. 35] shows the vapor pressures of aqueous solutions saturated with various salts. It can be seen that the vapor pressures of the solutions saturated with NaCl, MgCl₂, CaCl₂, etc. are very low compared with the vapor pressure of water, suggesting the occurrence of the above phenomenon. With actual flue gas it is desirable to keep the gas at the outlet of the reaction column unsaturated with water, preferably at a relative humidity of about 70%, so as to prevent the deposition of the reaction product CaSO₄ on the walls of the reaction column or lines. The amount of moisture absorption and hence the water content of Ca(OH)₂ are adjusted by decreasing the supply of the moisture-absorbing substance when the relative humidity is high, and vice versa.

Since a moisture-absorbing substance raises the boiling point of water, the temperature of the gas at the outlet of the reaction column is measured, the saturated vapor pressure of water at the measured gas temperature is calculated, and the rate at which the aqueous solution of the moisture-absorbing substance is introduced is adjusted, so that the relative humidity does not reach 100%. An absorbent slurry rich with a moisture-absorbing substance elevates the boiling point of water, and with the same amount of water being introduced, it will arrive at the dew point at a higher outlet gas temperature than with an absorbent slurry free of the moisture-absorbing substance. Therefore, in order to prevent the deposition of wet scale of the absorbent and reaction products on the walls of the reaction column, it is necessary to keep the relative humidity of water in the outlet gas short of 100%. To this end, it is a key point to adjust the supply of the aqueous solution of a moisture-absorbing substance while monitoring the outlet gas temperature and calculating water balance.

In accordance with the invention an alkaline slurry with the addition of a moisture-absorbing substance is sprayed inside a reaction column into contact with SO₂ gas contained in flue gas. The water-absorbing (water-retaining) effect of the moisture-absorbing substance then combines with the ebullioscopic (boiling point elevation) evaporation-retarding effect to accelerate the reaction between Ca(OH)₂ and SO₂ through the medium of water. Thus, the solid-gas reaction is promoted and hence the SO₂ removal is improved.

Also, the deposition of wet scale of the absorbent or reaction product on reactor walls can be prevented by measuring the reactor outlet gas temperature and accordingly adjusting the addition of the moisture-absorbing substance so that the relative humidity may be kept below 100% allowing for the boiling point elevation with the moisture-absorbing substance.

### BRIEF DESCRIPTION OF THE DRAWINGS

Fig. 1 is a schematic view illustrating the process of the invention for flue gas treatment;
Fig. 2 is a schematic view illustrating a conventional process for flue gas treatment; and
Fig. 3 is a graph showing vapor pressures with aqueous solutions saturated with various salts.

### DETAILED DESCRIPTION OF THE PREFERRED EMBODIMENT

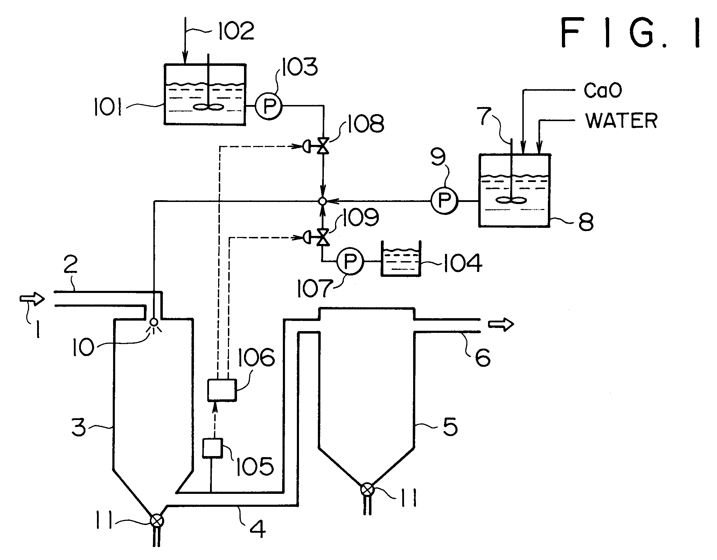

An example of the invention will now be explained with reference to Fig. 1. The basic process is similar to the conventional one, and most components of the system and the flow of process are as described above. To enhance the solid-gas reaction rate, additional components are installed as follows.

A moisture absorbent tank 101 is filled with an aqueous solution of a moisture-absorbing substance 102 and connected via a pump 103 to a Ca(OH)₂ slurry line. The supply is controlled in the following way. A temperature sensor 105 mounted on a gas discharge line 4 detects the gas temperature and, in response to a signal from the sensor a computer 106 calculates the ebullioscopic (boiling point elevation) vapor pressure and a flow rate for maintaining a relative humidity of less than 100%, and transmits the information to a valve 108 so as to adjust the supply of the moisture-absorbing substance solution 102.

Fresh water from a water tank 104 is introduced through a pump 107 into the Ca(OH)₂ slurry line in varying amounts corresponding to changes in the amount of the solution being supplied from the moisture absorbent tank 101. Preferably, the water flow rate is computed by the computer 106 so as to maintain the amount of water to be sprayed by the atomizer 10 at a desired level, and the result is conveyed to the valve 109 for the proper control of the water supply. An increase or decrease in the supply through the valve 109 corresponds to an decrease or increase, respectively, in the supply through the valve 108. The rates of supply of the moisture absorbent and fresh water are controlled, and thus the outlet gas temperature is adjusted to a predetermined value, so that the relative humidity of the outlet gas after the elevation of the boiling point is less than 100%.

In accordance with the flow of process illustrated in Fig. 1, SO₂ removal from flue gas was carried out under the following set of conditions:

The flow rate of the gas being treated = 20 m³N/H; gas temperature = 140°C; SO₂ concentration = 500 ppm; H₂O concentration = 10%; CO₂ concentration = 13%; O₂ concentration = 5%; and N₂ concentration = balance.

When the supply of the moisture absorbent was cut off with the valve 108 fully closed, the gas temperature in the discharge line 4 was 60°C and the SO₂ concentration in the discharge line was 270 ppm. The amount of the Ca(OH)₂ slurry being supplied then was kept equimolar to the amount of SO₂ being introduced into the reaction column 3. In other words, the adjustment was made so that the molar amount of Ca(OH)₂ supply is maintained equal to the molar amount of SO₂ being introduced into the reaction column.

Next, on the basis of the gas temperature of 60°C detected in the discharge line 4, the valve 108 was opened to introduce the moisture absorbent under such conditions as to maintain a relative humidity of less than 100%. Sea water was utilized as the moisture absorbent and supplied at the rate of 0.3 l/h. The valve 109 was throttled to reduce the amount of fresh water to the same amount as the sea water introduced.

The fact that the temperature measured by the temperature sensor 105 was 60°C and a relative humidity of less than 100% was maintained was supported by the absence of any water as a condensate in the gas at the outlet of the reactor and also by the absence of scale troubles due to the deposition of reaction products. At that time the SO₂ concentration in the gas inside the discharge line 6 was 170 ppm, evidently showing an ameliorating effect upon the desulfurization performance.

As the water content of Ca(OH)₂ slurry droplets sprayed from the atomizer 10 evaporated, the velocity of evaporation slowed down due to the elevation of the boiling point by the action of NaCl in sea water with the water content of the Ca(OH)₂ slurry increasing. A remarkable reduction of the outlet SO₂ concentration, from 270 ppm down to 170 ppm, was demonstrated.

The product contained about 10% by weight of Cl but could be handled as a powder.

In another test run the above procedure was repeated with the exception that the moisture absorbent tank 101 was filled with a CaCl₂-saturated aqueous solution in place of sea water. The SO₂ concentration in the gas inside the discharge line 6 was 150 ppm, or less than the SO₂ concentration value observed when the supply of the aqueous moisture absorbent solution was shut off.

Similarly, test runs were carried out with an aqueous solution saturated with MgCl₂ placed in the moisture absorbent tank 101, and then with each of aqueous solutions saturated with K₂CO₃, Ca(NO₃)₂, and Mg(NO₃)₂. Throughout these runs the SO₂ concentration in the gas inside the discharge line 6 was lower than the level attained without the supply of the aqueous moisture absorbent solution.

With all the absorbents tested the relative humidity was found to be less than 100% from the water balance computation based on the measured temperature of the reactor outlet gas. These runs proved that the beneficial effect upon desulfurization can be maintained stably without the deposition of wet scale of the absorbent or reaction products on the reactor walls.

## Claims

1. A process of treating flue gas utilizing a semi-dry method of operation, in which sulfur oxides in the flue gas are brought into contact with an alkaline compound-containing absorbent slurry which is sprayed inside a reaction column to remove the sulfur oxides from the flue gas, the water of the slurry being completely evaporated inside the reaction column characterized in that the temperature of said flue gas at the outlet of said reaction column is measured, and the amount of either one of a moisture-absorbing substance or an aqueous solution thereof that is added to said absorbent slurry supplied to said reaction column is adjusted in dependence on the saturated water vapor pressure value calculated for said measured temperature value while taking boiling point elevation into account, so that the relative humidity inside said reaction column is kept less than 100%.

2. The process as claimed in claim 1, wherein said aqueous solution of a moisture-absorbing substance is sea water.

3. The process as claimed in claim 1, wherein said moisture-absorbing substance is at least one compound selected from the group consisting of CaCl₂, MgCl₂, LiCl, LiBr, LiI, CaI₂, CaBr₂, NaCl, Na₂CO₃, Mg(NO₃)₂, Ca(NO₃)₂, and K₂CO₃.

## Patentansprüche

1. Verfahren zur Behandlung von Rauchgas unter Anwendung eines Halbtrockenverfahrens, in dem Schwefeloxide in dem Rauchgas in Kontakt mit einer eine alkalische Verbindung enthaltenden Absorptionsaufschlämmung gebracht werden, die in das Innere einer Reaktionskolonne gesprüht wird, um die Schwefeloxide aus dem Rauchgas zu entfernern, wobei das Wasser der Aufschlämmung im Innern der Reaktionskolonne vollständig verdampft wird,
**dadurch gekennzeichnet, daß**
die Temperatur des Rauchgases am Auslaß der Reaktionskolonne gemessen wird, und die Menge entweder der feuchtigkeitsabsorbierenden Substanz oder einer wäßrigen Lösung davon, die zu Absorptionsaufschlämmung gegeben wird, die der Reaktionskolonne zugeführt wird, in Abhängigkeit von dem Wert des Wasserdampf-Sättigungsdrucks, der für den gemessenen Temperaturwert berechnet wird, wobei eine Berücksichtigung der Siedepunktserhöhung erfolgt, so eingestellt wird, daß die relative Feuchtigkeit im Inneren der Reaktionskolonne auf einen Wert von weniger als 100% gehalten wird.

2. Verfahren nach Anspruch 1,
**dadurch gekennzeichnet, daß**
die wäßrige Lösung der feuchtigkeitabsorbierenden Substanz aus Meerwasser besteht.

3. Verfahren nach Anspruch 1,
**dadurch gekennzeichnet, daß**
die feuchtigkeitsabsorbierende Substanz mindestens eine Verbindung ist, die aus der Gruppe bestehend aus CaCl₂, MgCl₂, LiCl, LiBr, LiI, CaI₂, CaBr₂, NaCl, Na₂CO₃, Mg(NO₃)₂, Ca(NO₃)₂ und K₂CO₃ ausgewählt ist.

## Revendications

1. Processus de traitement de gaz de fumée utilisant un procédé semi-humide de mise en oeuvre, dans lequel de l'oxyde de soufre dans les gaz de fumée est mis en contact avec une émulsion absorbante contenant un composé alcalin qui est pulvérisée à l'intérieur d'une colonne à réaction pour retirer l'oxyde de soufre des gaz de fumée, l'eau de l'émulsion étant complètement évaporée à l'intérieur de la colonne à réaction, caractérisé en ce que la température desdits gaz de fumée, au niveau de la sortie de ladite colonne à réaction, est mesurée, et en ce que la quantité de l'une ou l'autre d'une substance absorbant l'humidité ou d'une solution aqueuse de cette dernière, qui est ajoutée à ladite émulsion d'absorbant délivrée à ladite colonne à réaction, est ajustée selon la valeur de pression de vapeur d'eau saturée calculée pour ladite valeur de température mesurée tout en tenant compte de l'élévation du point d'ébullition, de sorte que l'humidité relative à l'intérieur de ladite colonne à réaction est gardée au-dessous de 100 %.

2. Processus selon la revendication 1, dans lequel ladite solution aqueuse d'une substance d'absorption d'humidité est de l'eau de mer.

3. Processus selon la revendication 1, dans lequel ladite substance d'absorption d'humidité est au moins un composé particulier sélectionné à partir du groupe constitué du CaCl₂, du MgCl₂, du LiCl, du LiBr, du LiI, du CaI₂, du CaBr₂, du NaCl, du Na₂CO₃, du Mg(NO₃)₂, du Ca(NO₃)₂, et du K₂CO₃.
